Europäisches Patentamt

European Patent Office

Office européen des brevets

(19)

(11) Numéro de publication: **0 112 190**

**A1**

(12) # DEMANDE DE BREVET EUROPEEN

(21) Numéro de dépôt: **83401843.4**

(22) Date de dépôt: **21.09.83**

(51) Int. Cl.³: **F 02 M 21/02**

(30) Priorité: **24.09.82 FR 8216257**

(43) Date de publication de la demande:
**27.06.84 Bulletin 84/26**

(84) Etats contractants désignés:
**AT BE CH DE FR GB IT LI LU NL SE**

(71) Demandeur: **COMPAGNIE FRANCAISE
D'EXPLOITATION DE MARQUES-COFREM Société dite:
Les Levées Chemin Départemental 751
F-37700 Saint Pierre des Corps(FR)**

(72) Inventeur: **Bourgeon, Michel
30, rue Montesquieu
F-38100 Grenoble(FR)**

(72) Inventeur: **Mounier, Marc
F-13250 Pont de Rhaud
Par Cornillon(FR)**

(74) Mandataire: **Bourgognon, Jean-Marie et al,
Cabinet Flechner 22, Avenue de Friedland
F-75008 Paris(FR)**

(54) **Dispositif d'alimentation en carburant gazeux du carburateur d'un moteur à combustion interne.**

(57) Dispositif d'alimentation du carburateur d'un moteur à combustion interne. Ce dispositif d'alimentation en gaz de pétrole liquéfié du carburateur d'un moteur à combustion interne comprend un moyen pour modifier le débit de gaz constitué d'un corps fermé (1) dans lequel un flasque (11) à lumière (12) est monté tournant de manière à amener la lumière (12) plus ou moins à recouvrement avec le raccord de sortie (4).

FIG_1

EP 0 112 190 A1

TITRE MODIFIE
voir page de garde

Dispositif d'alimentation du carburateur d'un moteur à combustion interne.

La présente invention concerne des dispositifs d'alimentation en carburant gazeux, notamment en gaz de pétrole liquéfié, du carburateur d'un moteur à combustion interne ayant une pédale d'accélération, comprenant des moyens, commandés par la pédale d'accélération et destinés à modifier le débit de gaz passant d'un conduit d'admission à un conduit de sortie débouchant dans le carburateur.

Au certificat d'addition français No.74 093, on décrit un mélangeur (distributeur) à gaz pour moteurs à explosion alimentés au gaz. Le mélangeur est disposé, en aval du papillon de commande, de manière à s'adapter à l'alimentation du moteur et à s'ajouter au carburateur. Il comprend une buse de diffusion et un robinet. Le robinet comporte un boisseau commandé par la pédale d'accélération d'origine et dans lequel est ménagée une ouverture qui présente une largeur variant dans sa hauteur qui donne le gaz nécessaire à tous les régimes du moteur.

Le réglage du débit est donné par le réglage de l'interstice compris entre le boisseau tournant et le corps du robinet. Ce réglage est peu précis, en raison de la conformation compliquée du boisseau et de l'étanchéité qui est médiocre.

L'usinage nécessité par le robinet convient mal à la production en grande série de pièces pour véhicules automobiles dont on souhaite la reproductibilité des réglages. En outre, il n'est pas possible de réaliser simplement une alimentation compound.

L'invention pallie ces inconvénients par un dispositif d'alimentation, dont la précision peut être améliorée pratiquement à volonté d'une manière simple, qui est étanche, qui donne une alimentation stabilisée et homogénéisée à tous les régimes du moteur et qui permet de réaliser une alimentation compound très simplement.

Suivant l'invention, les moyens destinés à modifier le débit de gaz comprennent un corps fermé dans lequel débouchent, de part et d'autre d'un flasque à lumière de largeur variable, le conduit d'admission et le conduit de sortie, le flasque étant monté par des moyens de liaison de manière à pouvoir se déplacer d'une position où la lumière n'est pas à recouvrement avec l'un des conduits à une position où elle est à recouvrement avec ce conduit.

La coopération d'un flasque à lumière et d'un conduit donne une réalisation plus étanche et plus précise, d'autant qu'il suffit de donner au flasque, lorsqu'il est déplacé en rotation, un rayon plus grand pour améliorer la précision. Quand le conduit recouvert par le flasque est le conduit de sortie, le corps fermé constitue une chambre de stabilisation des flux gazeux, d'autant plus efficace que les conduits d'admission et de sortie n'y débouchent pas dans le prolongement l'un de l'autre.

Suivant une variante particulièrement avantageuse en soi, parce qu'elle supprime l'effet des vibrations et rend le montage du dispositif indépendant de la conformation du carburateur d'origine, de son emplacement et de ses raccords, l'invention vise un dispositif d'alimentation en carburant gazeux, notamment en gaz de pétrole liquéfié, du carburateur d'un moteur à combustion interne ayant une pédale d'accélération, comprenant des moyens destinés à modifier le débit de gaz allant au carburateur et des moyens de liaison desdits moyens de modification du débit à la pédale d'accélération du moteur, caractérisé en ce que lesdits moyens de modification communiquent avec le carburateur par un conduit souple et les moyens de liaison comprennent une transmission souple ayant un mécanisme de réglage de leur longueur.

Le dispositif est ainsi monté flottant et peut s'adapter à toutes les situations tant définitives dues à la conception même du moteur que temporaires provoquées par les vibrations.

Au dessin annexé, donné uniquement à titre d'exemple :

la figure 1 est une vue en perspective, avec arrachement, d'une partie d'un dispositif suivant l'invention,

la figure 2 est une vue éclatée de ce dispositif, et

la figure 3 est une vue en plan d'un flasque pour alimentation compound.

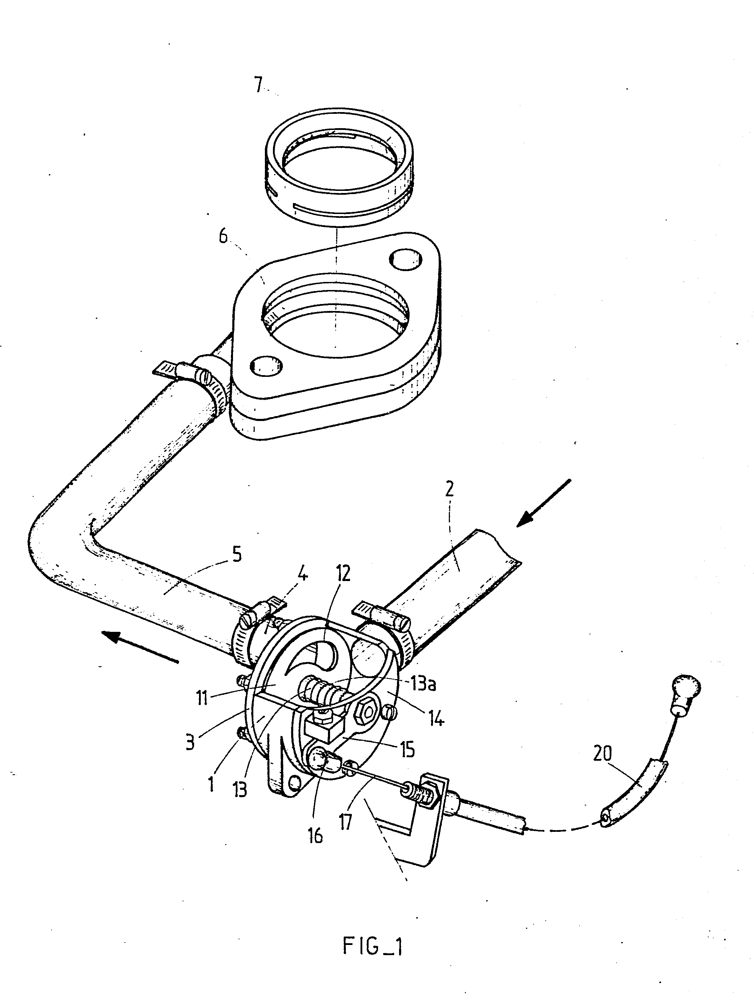

Le dispositif représenté à la figure 1 comprend un corps fermé 1 en forme de cylindre. Sur la face latérale du corps 1 débouche un raccord 2 pour le conduit d'admission du gaz provenant d'un vapo-détendeur. De l'une des bases 3 du corps 1 part un raccord 4 excentré. L'extrémité d'un conduit souple 5 se raccorde au raccord 4. A l'autre extrémité du conduit souple 5 est fixée une bride 6 d'alimentation avec diffuseur 7 interchangeable. La bride 6 est serrée entre l'embase 8 du carburateur 9 et le collecteur 10 d'admission du mélange.

Un flasque 11, muni d'une lumière 12 en forme de larme, est solidaire d'un tourillon 13 avec ressort de rappel 13a et peut ainsi tourner à l'intérieur du corps 1 en étant appliqué sur la paroi intérieure de la base 3. Pendant la rotation, la lumière 12 vient de plus en plus en coïncidence avec le raccord 4. Le tourillon 13 traverse la base 14, opposée à la base 3, et, à l'extérieur du corps 1, est solidaire en rotation de l'une des extrémités d'une biellette 15, dont l'autre extrémité porte une boule d'attelage. Cette boucle coopère avec une rotule 16 fixée à l'une des extrémités d'un câble 17. Un support 18 fixé au corps 1 porte une pièce d'arrêt 19 de la gaine souple 20 du câble souple 17. Le câble 17 est monté de la même façon sur le tambour 21 de commande de carburateur par l'intermédiaire d'une biellette 22, d'une rotule 23 , d'un support 24 et d'une pièce d'arrêt 25 de la gaine, si ce n'est que cette pièce 25 est taraudée et peut se visser sur une vis 26 portée par le support 24 en sorte que la longueur du câble 17 peut être modifiée en vissant plus ou moins la pièce 25 sur la vis, pour compenser les jeux. La biellette 22 est attaquée par un câble commandé par la pédale d'accélération (non représentée).

Quand on appuie sur la pédale d'accélération, on fait tourner le flasque 12 par l'intermédiaire de la transmission 15 à 26 et on amène ainsi de plus en plus la lumière 12 et le raccord à recouvrement. Quand on lâche la pédale le ressort 13a ramène la lumière 12 hors de coïncidence avec le raccord 5.

Le corps 1 forme une chambre de stabilisation pour le gaz qui arrive par le conduit 2, quelle que soit la répartition des veines gazeuses dans le flux gazeux même aux divers régimes du moteur alors que la dépression peut varier de moins 40 mbar à moins 650 mbar. L'alimentation s'en trouve améliorée et rendue plus régulière. La précision du réglage de débit peut être améliorée facilement en augmentant le diamètre du flasque.

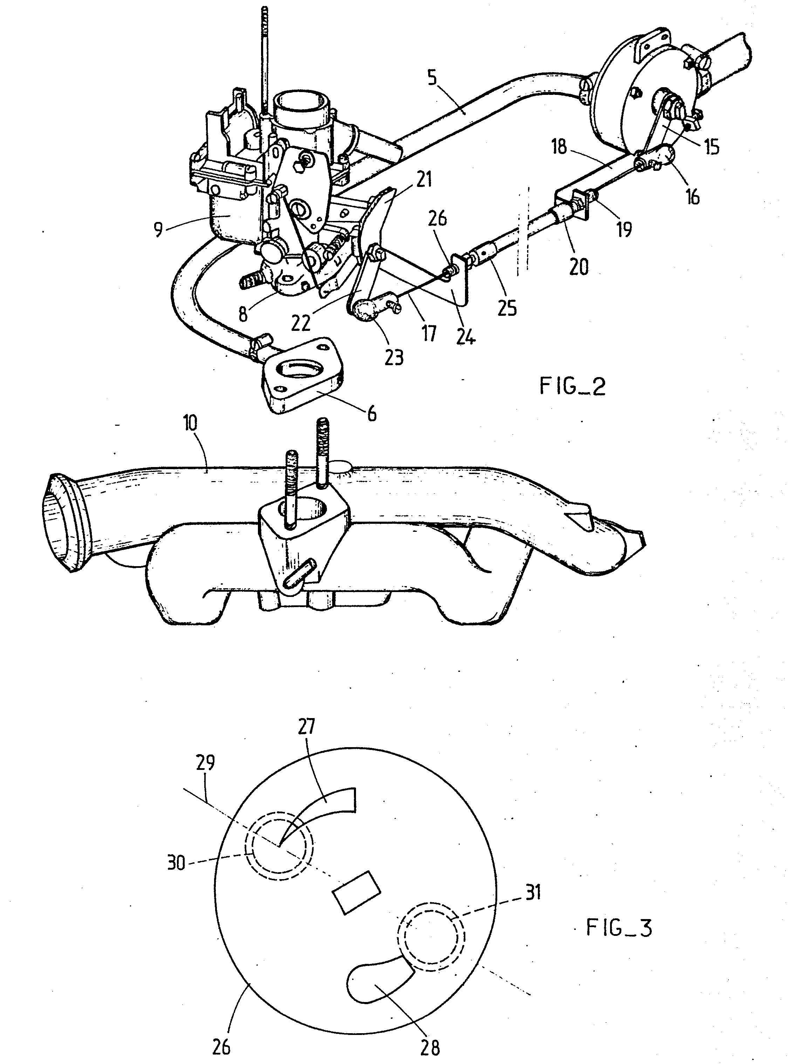

A la figure 3, le flasque 26 monté tournant est un disque comprenant deux lumières 27, 28 disposées de part et d'autre d'un diamètre 29 de manière que la rotation du flasque 26 dans le sens inverse des aiguilles d'une montre amène d'abord la lumière 27, de plus petite hauteur que la lumière 28, à recouvrement avec un raccord 30 de sortie puis amène, quand la lumière 27 cesse d'être en coïncidence avec le raccord 30, la lumière 28 à recouvrement avec un second raccord 31. Ceci permet d'effectuer une alimentation compound.

REVENDICATIONS

1. Dispositif d'alimentation en carburant gazeux, notamment en gaz de pétrole liquéfié, du carburateur (9) d'un moteur à combustion interne ayant une pédale d'accélération, comprenant des moyens, commandés par la pédale d'accélération destinés à modifier le débit de gaz passant d'un conduit d'admission (2) à un conduit de sortie (4) débouchant dans le carburateur (9), caractérisé en ce que les moyens comprennent un corps fermé (1) dans lequel débouchent, de part et d'autre d'un flasque (11) à lumière (12) de largeur variable, le conduit d'admission (2) et le conduit de sortie (4), le flasque (12) étant monté par des moyens de liaison de manière à pouvoir se déplacer d'une position où la lumière (12) n'est pas à recouvrement avec l'un des conduits à une position où elle est à recouvrement avec ce conduit.

2. Dispositif suivant la revendication 1, caractérisé en ce que le flasque (11) est monté tournant.

3. Dispositif suivant la revendication 1 ou 2, caractérisé en ce que le conduit à recouvrement est le conduit de sortie (4).

4. Dispositif suivant la revendication 1, 2 ou 3, caractérisé en ce que le conduit de sortie (4) n'est pas dans l'alignement du conduit d'admission (2).

5. Dispositif suivant l'une des revendications 1 à 4, caractérisé en ce que le flasque (26) comprend deux lumières (27, 28) s'étendant de part et d'autre d'un diamètre du flasque.

6. Dispositif suivant l'une des revendications 1 à 5, caractérisé par des moyens pour relier le flasque (11) à la pédale d'accélération du moteur.

7. Dispositif d'alimentation en carburant gazeux, notamment en gaz de pétrole liquéfié, du carburateur (9) d'un moteur à combustion interne ayant une pédale d'accélération, comprenant des moyens destinés à modifier le débit de gaz allant au carburateur (9) et des moyens de liaison desdits moyens de modification du débit à la pédale d'accélération du moteur, caractérisé en ce que lesdits moyens de modification communiquent avec le carburateur par un conduit souple (5) et ces moyens de liaison comprennent une transmission (17, 20) souple ayant un mécanisme de réglage (25, 26) dans leur longueur.

FIG_1

FIG_2

FIG_3

# RAPPORT DE RECHERCHE EUROPEENNE

**Office européen des brevets**

**0112190**
Numéro de la demande

EP 83 40 1843

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | US-A-1 890 058 (HOLZAPFEL)<br>* page 1, lignes 90-100; page 2, lignes 1-30; figures 1,2 *<br><br>--- | 1,2,6 | F 02 M 21/02 |
| Y | FR-A-1 149 777 (STURM)<br>* en entier *<br><br>--- | 1 | |
| Y | US-A-2 881 063 (BUTTERWORTH)<br>* colonne 1, lignes 15-21 et 63-68; colonne 2, lignes 47-71; colonne 3, lignes 1-12, 44-50 et 72-75; colonne 4, lignes 1-35 *<br><br>--- | 1,2,6 | |
| D,Y | FR-E- 74 093 (STURM)<br>* page 1, colonne de gauche, en entier; colonne de droite, alinéa 2 *<br><br>--- | 1 | |
| A | FR-A- 887 626 (HESSENWERK RUDOLF MAJERT)<br>* page 1, lignes 1-4; page 2, lignes 1-21 et 30-40 *<br><br>--- | 1 | DOMAINES TECHNIQUES RECHERCHES (Int. Cl. ³)<br><br>F 02 M<br>F 02 D |
| A | US-A-2 847 288 (TAYLOR)<br>* colonne 1, lignes 19-23 et 34-45; colonne 2, lignes 6-8,22-38 et 72-75; colonne 4, lignes 1-41; colonne 5, lignes 5-11 *<br><br>--- -/- | 1,6 | |

Le présent rapport de recherche a été établi pour toutes les revendications

| Lieu de la recherche<br>LA HAYE | Date d'achèvement de la recherche<br>21-02-1984 | Examinateur<br>JORIS J.C. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82

Office européen
des brevets

**RAPPORT DE RECHERCHE EUROPEENNE**

Numéro de la demande

EP  83 40 1843

| | **DOCUMENTS CONSIDERES COMME PERTINENTS** | | Page  2 |
|---|---|---|---|
| Catégorie | Citation du document avec indication, en cas de besoin, des parties pertinentes | Revendication concernée | CLASSEMENT DE LA DEMANDE (Int. Cl. ³) |
| A | GB-A-1 218 242  (MILBANK & KEITH GARAGES LTD) <br> * page  1,  lignes 9-13; page 2, lignes  39-77;  page  4,  lignes 51-58; figures 1,8,9,10 * <br><br> --- | 7 | |
| A | FR-A-2 322 314  (ITW LTD.) <br><br> ----- | | |
| | | | DOMAINES TECHNIQUES RECHERCHES (Int. Cl. ³) |
| | Le présent rapport de recherche a été établi pour toutes les revendications | | |

| Lieu de la recherche<br>LA HAYE | Date d'achèvement de la recherche<br>21-02-1984 | Examinateur<br>JORIS J.C. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

\& : membre de la même famille, document correspondant

OEB Form 1503 03 82